# EUROPEAN PATENT SPECIFICATION

(11) **EP 3 480 341 B1**
(45) Date of publication and mention of the grant of the patent: **01.12.2021**
(21) Application number: 18197474.2
(22) Date of filing: 28.09.2018
(51) Int. Cl.: C25B 9/50, C25B 9/65, C25B 11/052, C25B 11/067, C25B 11/087, C25B 1/04, C25B 1/55, C25B 9/17

(54) **PHOTOELECTROCHEMICAL WATER SPLITTING**
PHOTO-ELEKTROCHEMISCHE WASSERSPALTUNG
DISSOCIATION PHOTOÉLECTROCHIMIQUE DE L'EAU

(30) Priority: 07.11.2017 IN 201721039690
(43) Date of publication of application: 08.05.2019
(73) Proprietor: INDIAN OIL CORPORATION Ltd., Mumbai 400 051 (IN)
(72) Inventor: SACHDEV, Sunil, 121007 Haryana (IN); BERA, Tapan, 121007 Haryana (IN); BADHE, Rajesh Muralidhar, 121007 Haryana (IN); SRIVASTVA, Umish, 121007 Haryana (IN); SHARMA, Alok, 121007 Haryana (IN); ACHARYA, Gopala Krishna, 121007 Haryana (IN)
(74) Representative: Hynell Intellectual Property AB

(56) References cited:
- JP-A- 2015 196 869
- US-A- 5 785 768
- US-A1- 2011 245 074
- Michael G. Walter ET AL: "Solar Water Splitting Cells", Chemical Reviews, vol. 110, no. 11, 10 November 2010 (2010-11-10), pages 6446-6473, XP055143045, ISSN: 0009-2665, DOI: 10.1021/cr1002326

## Description

### FIELD OF THE INVENTION

The present invention relates to water splitting and particularly, to a Photoelectrochemical (PEC) module and a method for performing PEC water splitting.

### BACKGROUND

Water splitting refers to a chemical reaction to dissociate the water into oxygen and hydrogen. Currently, a process, such as Photoelectrochemical (PEC) water splitting, is employed for dissociating water and thereby, to produce hydrogen gas. The PEC water splitting process includes a semiconductor electrode disposed in electrolyte solution. The semiconductor electrode is provided to convert solar energy directly into chemical energy to dissociate water. In particular, the semiconductor electrode converts the solar energy into electron-hole pairs to conduct redox reaction for water splitting.

Generally, the semiconductor electrode may be made of a wide-band semiconductor material or a narrow-band semiconductor material. The semiconductor electrode with the wide-band semiconductor material is capable of performing water splitting in presence of solar energy without any aid from an external voltage source. However, the wide-band semiconductor material fails to harness majority of solar spectrum to perform the water splitting.

Further, the semiconductor electrode with the narrow-band semiconductor material is capable of harnessing majority of solar spectrum. However, the narrow-band semiconductor material fails to generate adequate voltage required for the water splitting. Therefore, the semiconductor electrode with the narrow-band semiconductor material requires the external voltage source for providing the adequate voltage to perform the water splitting. Additionally, various high efficiency materials, such as Silicon and III-V semiconductors (Aluminum, Galium, Arsenide etc.), can be used in the semiconductor electrode. However, such high efficiency materials are not stable in the electrolytes, such as strong electrolytes, which render the usage of such high efficiency material in the semiconductor electrode. Hence, to effectively and efficiently perform the water splitting, geometrical scale-up of the semiconductor electrode is required.

However, the geometrical scale-up of the semiconductor electrode is not suitable due to resistive losses. In particular, the semiconductor electrode includes a substrate made of conducting materials. Generally, such conducting materials have a high sheet resistivity which leads to increase in the resistive losses, if a size of the semiconductor electrode is increased. Further, the resistive losses in the semiconductor electrode may lead to decrease in a flow of current harnessed from the solar spectrum by the semiconductor electrode.

U.S. Patent 7,459,065, hereinafter referred to as '065 patent, discloses a large scale system for hydrogen production wherein the energy for water dissociation was mainly obtained from photovoltaic module submersed into the electrolyte. The application '065 discloses an apparatus for creating hydrogen from the disassociation of water using sunlight (photoelectrolysis) is provided. The system utilizes an aqueous fluid filled container which functions both to hold the water to be disassociated and as a light collecting lens. A photovoltaic module is positioned at a point to most efficiently accept the refracted light from the fluid filled container. A pair of electrodes which are coupled to the photovoltaic module are disposed within the fluid and configured to split the water into hydrogen and oxygen. However, the photovoltaic module disclosed in the '065 patent is unstable when submersed in the water to be disassociated.

U.S. Patent Application 2004/0003837, hereinafter referred to as '837 application, discloses an integrated photovoltaic-photoelectrochemical device. The '837 application discloses photovoltaic-photoelectrochemical devices each comprising a diode and a plurality of separate photocathode elements. Preferably, the devices are positioned in a container in which they are at least partially immersed in electrolyte. Preferably, the devices are positioned in a container which has at least one photocathode reaction product vent and at least one anode reaction product vent. Preferably, the devices are positioned in a container which has an internal partial wall extending from a top portion of the container toward, but not reaching, a bottom portion of the container, the internal partial wall being positioned between the photocathode elements and an anode element which is electrically connected to the p-region of the diode. However, it demands complicated process for the fabrication of the device for water splitting.

JP 2015-196859 discloses a PEC with a working electrode comprising a plurality of semiconductor layers disposed on a first conducting layer arranged on a single substrate.

### SUMMARY

The invention is defined in the appended set of claims.

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of its scope. The invention will be described and explained with additional specificity and detail with the accompanying drawings.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
Figure 1a illustrates a schematic view of a system for performing Photoelectrochemical (PEC) water splitting, according to an embodiment of the present disclosure;
Figures 1b illustrates an isometric view of the system, according to an embodiment of the present disclosure;
Figure 1c illustrates another isometric view of the system, according to an embodiment of the present disclosure;
Figure 1d illustrates yet another isometric view of the system, according to an embodiment of the present disclosure;
Figure le illustrates another isometric view of the system, according to an embodiment of the present disclosure;
Figure 1f illustrates different views of a membrane assembly of the system, according to an embodiment of the present disclosure;
Figure 1g illustrates an isometric view of a counter electrode of the system, according to an embodiment of the present disclosure;
Figure 2 illustrates a schematic view of a PEC module of the system, according to an embodiment of the present disclosure;
Figure 3a illustrates a schematic view of an electrode, not according to the invention, of the PEC module, according to an embodiment of the present disclosure
Figure 3b illustrates a sectional view of the electrode taken along an axis X-X' of the Figure 3a, according to an embodiment of the present disclosure;
Figure 3c illustrates a sectional view of the electrode taken along an axis Y-Y' of the Figure 3a, according to an embodiment of the present disclosure;
Figure 4 illustrates a schematic view of an electrode, not according to the invention, of the PEC module, according to another embodiment of the present disclosure;
Figure 5 illustrates a schematic view of an electrode of the PEC module, according to an inventive embodiment of the present disclosure; and
Figure 6 illustrates a flowchart depicting a method of performing PEC water splitting, according to an inventive embodiment of the present disclosure.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### DETAILED DESCRIPTION OF FIGURES

For the purpose of promoting an understanding of the principles of the invention, reference will now be made to the embodiment illustrated in the drawings and specific language will be used to describe the same. It will nevertheless be understood that no limitation of the scope of the invention is thereby intended. Unless otherwise defined, all technical and scientific terms used herein have the same meaning as commonly understood by one of ordinary skilled in the art to which this invention belongs. The system, methods, and examples provided herein are illustrative only and not intended to be limiting.

Embodiments of the present invention will be described below in detail with reference to the accompanying drawings.

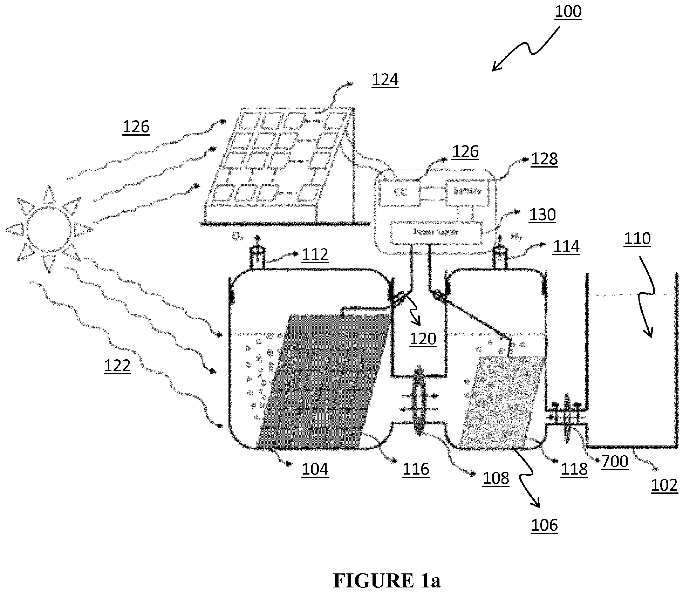

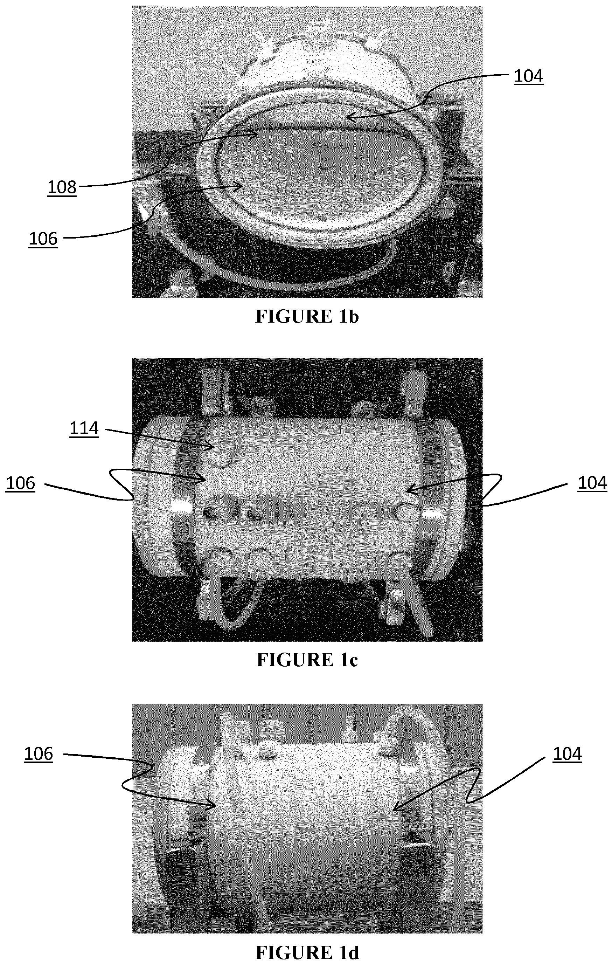

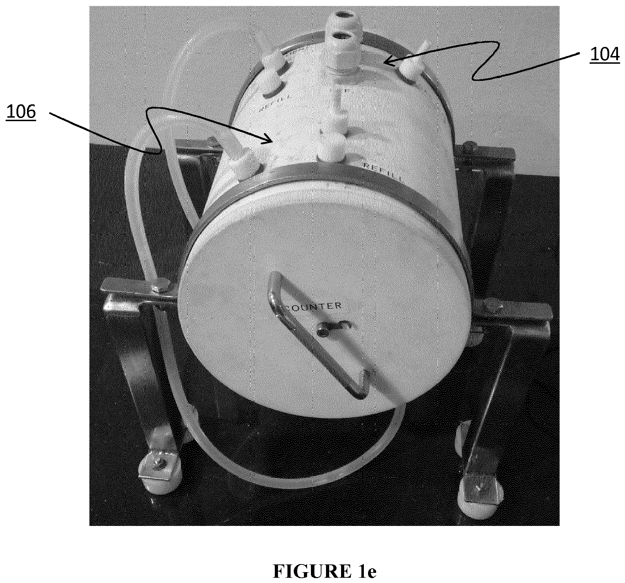

**Figure 1a** illustrates a schematic view of a system 100 for performing Photoelectrochemical (PEC) water splitting, according to an embodiment of the present disclosure. **Figures 1b, 1c, 1d****, and** **1e****,** illustrate isometric views of the system 100, according to embodiments of the present disclosure. Referring to Figures 1a, 1b, 1c, 1d and 1e, the system 100 is adapted to perform PEC water splitting to produce hydrogen gas and oxygen gas. The system 100 may include a reservoir 102 and a plurality of compartments in communication with the reservoir 102. In an embodiment, the plurality of compartment may include a first compartment 104 and a second compartment 106. The first compartment 104 may be in fluid communication with the second compartment 106. In an embodiment, the first compartment 104 and the second compartment 106 may be connected with each other through a leak proof rotary joint 108 or any other suitable mechanics known in the art, without departing from the scope of the present disclosure.

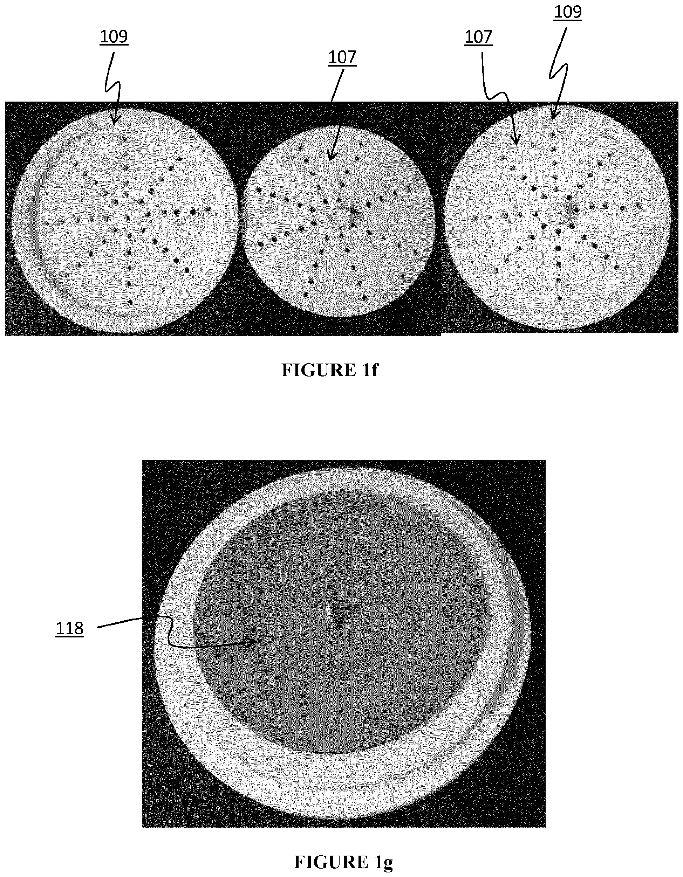

Referring to Figure 1f, in an embodiment, the first compartment 104 and the second compartment 106 may be in fluid communication through a membrane 107. The membrane 107 may be adapted to prevent a flow of gases between the first compartment 104 and the second compartment 106. In one example, the membrane 107 may be a Proton Exchange Membrane, such as Nafion membrane. Further, the membrane 107 may be positioned in the system 100 through a membrane holder 109. The membrane holder 109 may be provided with holes, and may be positioned in between the first compartment 104 and the second compartment 106 via a silicon O-ring. The membrane 107 and the membrane holder 109 may be collectively referred to as a membrane assembly, without departing from the scope of the present disclosure.

Further, the reservoir 102 may be in fluid communication with the second compartment 106. The reservoir 102 may be adapted to store electrolyte solution 110, and to maintain a level of the electrolyte solution 110 in the first compartment 104 and the second compartment 106. In an embodiment, the electrolyte solution 110 may be embodied as one of water based electrolyte solution or any other aqueous solution known in the art, without departing from the scope of the present disclosure.

The second compartment 104 may be adapted to receive the electrolyte solution 110 from the reservoir 102. The second compartment 104 may include a second vent 114 to allow flow of gases from the second compartment 104.

Referring to Figures 1a-1g, the system 100 may include a PEC module 116 positioned in the first compartment 104 and a counter electrode 118 (as shown in Figure 1g) positioned in the second compartment 106. The PEC module 116 may be in communication with the counter electrode 118. In an embodiment, the PEC module 116 may be in communication with the counter electrode 118 through a connector 120. In an example, the connector 120 may be embodied as a metallic connector. The connector 120 may be adapted to conduct electric current between the PEC module 116 and the counter electrode 118. In an embodiment, the counter electrode 118 may be formed of platinum or nickel.

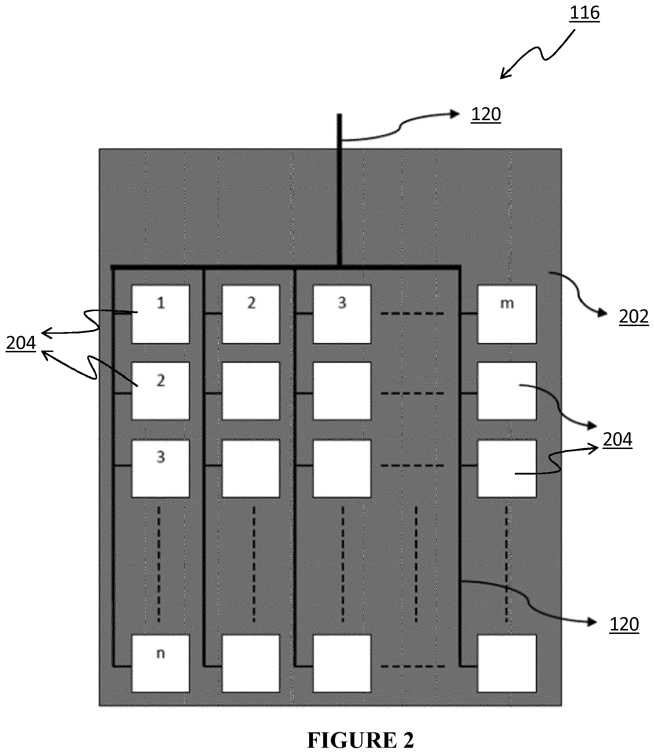

The PEC module 116 may be adapted to receive a portion of solar spectrum 122. In an embodiment, the PEC module 116 may receive the portion of solar spectrum 122 through a quartz window (not shown) formed in the first compartment 104. Further, the PEC module 116 may be adapted to convert the portion of solar spectrum 122 into an electrical energy for dissociating the electrolyte solution 110. Constructional and operational details of the PEC module 116 are explained in detail in the description of Figure 2 of the present disclosure.

**Figure 2** illustrates a schematic view of the PEC module 116 of the system 100, according to an embodiment of the present disclosure. The PEC module 116 includes a substrate 202 and a plurality of electrodes 204 arranged on the substrate 202. The plurality of electrodes 204 are interchangeably referred to as the working electrodes 204, without departing from the scope of the present disclosure.

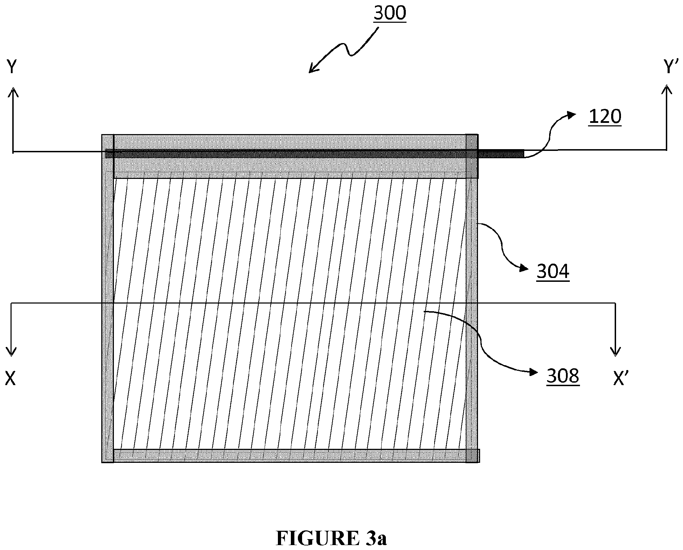

In an embodiment, the working electrodes 204 may be arranged in a form of matrix (m x n) on the substrate 202. In such an embodiment, the terms 'm' and 'n' represents a number of working electrodes 204 arranged along a column and a row of the matrix, respectively. In an embodiment, the PEC module 116 includes at least one connector 120, adapted to connect the plurality of electrodes 204, and to conduct the electric current from each of the plurality of electrodes 204. The working electrodes 204 are electrically connected with each other through the connector 120. More specifically, the working electrodes 204 may be electrically connected to the counter electrode 118 through the connector 120. Constructional and operational details of each of the working electrodes 204 is explained in detail in the description of Figure 3a, Figure 3b, Figure 3c, Figure 4, and Figure 5.

Referring to Figures 1a-1g and Figure 2, the PEC module 116 is adapted to dissociate the electrolyte solution 110 to produce gases. More specifically, the working electrodes 204 of the PEC module 116 dissociates the electrolytic solution 110 to generate an electric current and to produce gases. Upon receiving the portion of solar spectrum 122, the PEC module 116 dissociates the electrolyte solution 110 to produce gases, by initiating either oxidation reaction or reduction reaction in the electrolyte solution 110.

In one embodiment, the PEC module 116 may dissociate the electrolyte solution 110 in the first compartment 104 to produce oxygen. More specifically, each of the working electrodes 204 of the PEC module 116 may dissociate the electrolyte solution 110 in the first compartment 104 to produce oxygen, by initiating oxidation reaction as indicated by an equation (1) mentioned below:

H₂O + 2H⁺→ 2H⁺+ ½ O₂ ↑ --------------------------------------- (1)

In such an embodiment, the PEC module 116 may also generate the electric current, upon receiving the portion of solar spectrum 122. The counter electrode 118 may receive the electric current from the PEC module 116 through the connector 120. Upon receiving the electric current, the counter electrode 118 may dissociate the electrolyte solution 110 in the second compartment 106 to produce gases, by initiating either oxidation reaction or reduction reaction in the electrolyte solution 110. The counter electrode 118 may dissociate the electrolyte solution 110 in the second compartment 106 to produce hydrogen, as indicated by an equation (2) mentioned below:

2H⁺ + 2e⁻→ H₂ ↑ --------------------------------------- (2)

In another embodiment, the PEC module 116 may dissociate the electrolyte solution 110 in the first compartment 104 to produce hydrogen. More specifically, each of the working electrodes 204 of the PEC module 116 may dissociate the electrolyte solution 110 in the first compartment 104 to produce hydrogen, by initiating reduction reaction as indicated by an equation (3) mentioned below:

2H₂O + 2e⁻→ 2OH⁺+ H₂ ↑ --------------------------------------- (3)

In such an embodiment, the counter electrode 118 may dissociate the electrolyte solution 110 to produce oxygen in the second compartment 106.

Again referring to Figures 1a-1e, in an embodiment, the system 100 may include a photovoltaic module 124 in communication with the PEC module 116 and the counter electrode 118. The photovoltaic module 124 may be adapted to receive absorb the portion of the solar spectrum 126 to generate an electric current. The photovoltaic module 124 may be adapted to provide additional bias to the PEC module 116 through the connector 120, in addition to the portion of solar spectrum 122 received by the PEC module 116.

In an embodiment, the system 100 may also include a charge controller 126 in communication with the photovoltaic module 124, at least one battery 128 in communication with the charge controller 126, and a power supply unit 130 in communication with the at least one battery 126. The charge controller 124 may be adapted to control a rate of charging and a rate of discharging of the at least one battery 126. In an embodiment, the charge controller 124 may control a flow of electric current from the photovoltaic module 122 to the at least one battery 126, to prevent overcharging of the at least one battery 126. Further, the power supply unit 130 may be adapted to provide the electric current from the at least one battery at a desired output voltage to the PEC module 116.

For the sake of simplicity and better understanding, the present disclosure is explained with respect to only one working electrode of the PEC module 116. As would be appreciated by the person skilled in the art, the description of one working electrode is equally applicable to other working electrodes of the PEC module 116, without departing from the scope of the present disclosure.

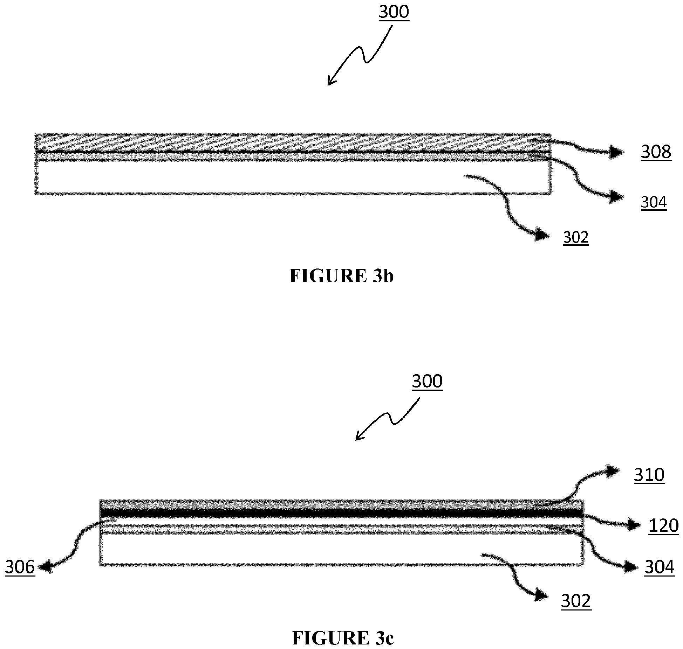

**Figure 3a** illustrates a schematic view of a working electrode 300 of the PEC module 116, according to an embodiment of the present disclosure. **Figure 3b** illustrates a sectional view of the working electrode 300 taken along an axis X-X' of the Figure 3a, according to an embodiment of the present disclosure. **Figure 3c** illustrates a sectional view of the working electrode 300 taken along an axis Y-Y' of the Figure 3a, according to an embodiment of the present disclosure.

Referring to Figures 3a, 3b and 3c, the working electrode 300 may include a substrate 302, a first conducting layer 304 disposed on the substrate 302, and a connector, such as the connector 120, disposed on the first conducting layer 304. In one example, the substrate 302 may be embodied as a glass substrate. In an embodiment, the first conducting layer 304 may be formed of at least one of an Indium Tin Oxide (ITO) and a Fluorine-Doped Tin (FTO).

The connector 120 may be distributed across the first conducting layer 304. In an embodiment, the connector 120 may be embodied as a metallic connector. The connector 120 may be adapted to conduct the electric current from the working electrode 300. The connector 120 may be adhered to the first conducting layer 304 through a second conducting layer 306. The second conducting layer 306 may be disposed on the first conducting layer 304.

More specifically, the second conducting layer 306 may be deposited on the first conducting layer 304 to adhere the connector 120 on the first conducive layer 304. In one example, the second conducting layer 304 may be embodied as a silver paint. In another example, the second conducting layer 304 may be embodied as any other conductive adhesive known in the art, without departing from the scope of the present disclosure. Further, the working electrode 300 may include an ohmic contact between the connector 120 and the first conducting layer 304. In an embodiment, the ohmic contact may be formed by joining the connector 120 to the first conducting layer 304 through the second conducting layer 306. The ohmic contact between the first conducting layer 304 and the connector 120 allows a flow of charge carriers to the connector 120.

Further, the working electrode 300 may include a semiconductor layer 308 disposed on the substrate 302. In an embodiment, the semiconductor layer 308 may be disposed on the first conducting layer 304. The semiconductor layer 308 may be formed of a photoactive semiconductor material. In an example, the photoactive semiconductor material may be one of an n-type semiconductor and a p-type semiconductor. In one example, the photoactive semiconductor material may be embodied as the n-type semiconductor. In such an example, the working electrode 300 may dissociate the electrolyte solution 110 in the first compartment 104 to produce hydrogen gas. In another example, the photoactive semiconductor material may be embodied as the p-type semiconductor. In such an example, the working electrode 300 may dissociate the electrolyte solution 110 in the first compartment 104 to produce oxygen gas.

In an embodiment, the semiconductor layer 308 may be embodied as a thin film semiconductor material. The semiconductor layer 308 may be deposited on the substrate 302 by using various deposition techniques known in the art, without departing from the scope of the present disclosure. The various deposition techniques may include, but are not limited to, a Physical Vapour Deposition (PVD), a Chemical Vapour Deposition (CVD), an atomic layer deposition, an electrodeposition, a Molecular Beam Epitaxy (MBE), and a spray pyrolysis.

In one embodiment, a number of portions of the first conducting layer 304 may be masked prior to a deposition of the semiconductor layer 308 on the substrate 302 coated with the first conducting layer 304. In particular, the number of portions may be masked on the first conducting layer 304 for forming the ohmic contacts between the connector 120 and the substrate 302 coated with the first conducting layer 304. In another embodiment, the number of portions of the first conducting layer 304 may be masked after the deposition of the semiconductor layer 308 on the substrate 302. In particular, the number of portions may be masked to prevent short-circuiting of junctions, via the ohmic contacts, between the electrolyte solution 110 and the semiconductor layer 308.

In an embodiment, the semiconductor layer 308 may be adapted to receive the portion of the solar spectrum 122 to generate to the charge carriers. The charge carriers may be collected by the connector 120 adhered to the first conducting layer 304, and in contact with the semiconductor layer 308. The charge carrier collected by the connector 120 may generate the electric current which is further supplied to the counter electrode 118 through the connector 120.

Further, the working electrode 300 may include an insulating layer 310 to shield the connector 120. The insulating layer 310 may be provided to shield the connector 120 on working electrode from the electrolyte solution 110. In an embodiment, the insulating layer 310 may be deposited in the connector 120. The insulating layer 310 may be embodied as epoxy resin or any other insulating material known in the art, without departing from the scope of the present disclosure. Further, the insulating layer 310 may be provided to shield portions of the first conducting layer 304 which may be exposed to the electrolyte solution 110.

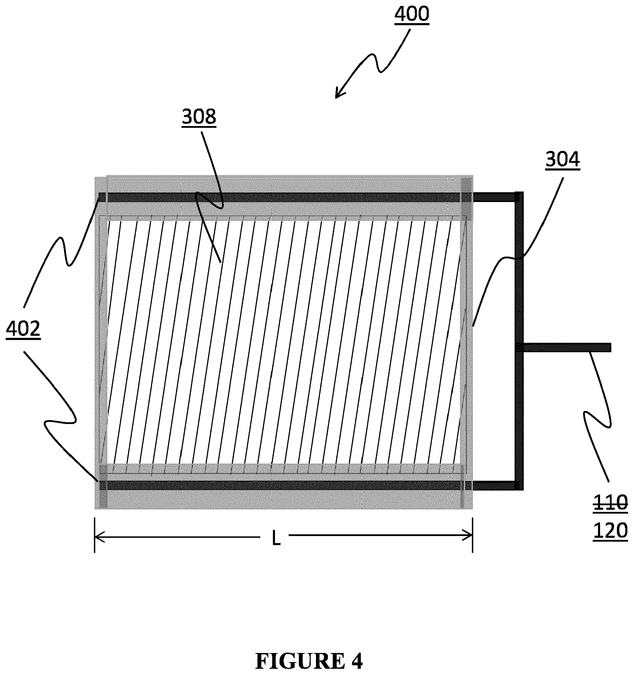

**Figure 4** illustrates a schematic view of a working electrode 400 of the PEC module 116, according to another embodiment of the present disclosure. Similar to the working electrode 300 of the Figures 3a-3c, the working electrode 400 includes the substrate 302, the first conducting layer 304 disposed on the substrate 302, the semiconductor layer 308 disposed on the first conducting layer 304, the second conducting layer 306, and the insulating layer 310.

However, the working electrode 400 of the present embodiment includes a pair of connectors 402 disposed on the first conducting layer 304. The pair of connectors 402 may be adhered to the substrate 302 through the second conducting layer 306. In one example, the second conducting layer 306 may be embodied as a silver paint. In another example, the second conducting layer 306 may be embodied as any other conductive adhesive known in the art, without departing from the scope of the present disclosure. In an embodiment, each of the pair of connectors 402 may be adhered on an edge portion of the substrate 302 along a length 'L' of the substrate 302 through the second conducting layer 304. In an embodiment, the pair of connectors 402 disposed on the working electrode 400 may be connected to the connector 120 of the system 100.

Further, the working electrode 400 may include a pair of ohmic contacts between the pair of connectors 402 and the first conducting layer 304. In an embodiment, each of the pair of ohmic contacts may be formed by joining each of the pair of connectors 402 to the first conducting layer 304 through the second conducting layer 306. The pair of ohmic contacts between the first conducting layer 304 and the pair of connectors 402 allows a flow of the charge carriers to the pair of connectors 402 from the semiconductor layer 308. The charge carriers collected by the pair of connectors 402 may generate the electric current which is further supplied to the counter electrode 118 through the connector 120.

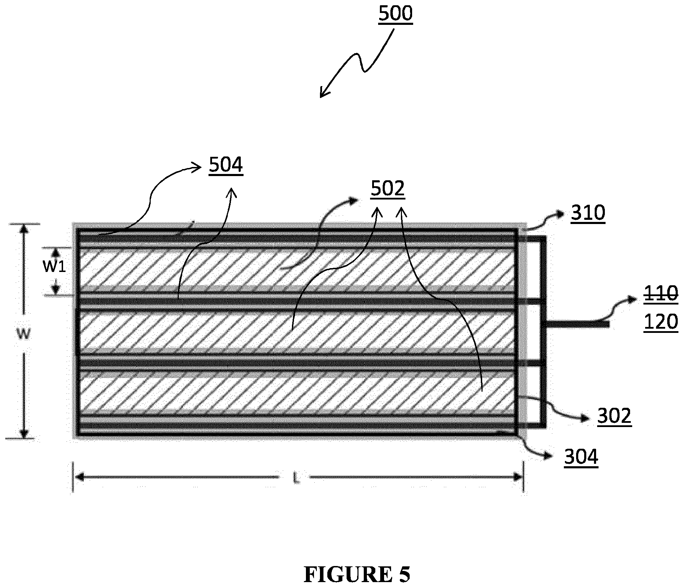

**Figure 5** illustrates a schematic view of a working electrode 500 of the PEC module 116, according to an inventive embodiment of the present disclosure. Similar to the working electrodes 300 and 400, the working electrode 500 includes a glass substrate 302, the first conducting layer 304 disposed on the substrate 302, and the insulating layer 310. The working electrode 500 may have a length 'L' and a width 'W'. The width 'W' of the working electrode 500 may be interchangeably referred to as first width 'W', without departing from the scope of the present disclosure.

However, the working electrode 500 of the present embodiment includes a plurality of semiconductor layers 502 and a plurality of connectors 504. The working electrode 500 includes a patterned deposition of the plurality of semiconductor layers 502. Each of the plurality of semiconductor layers 502 is adjacently arranged on the first conducting layer 304. More specifically, each of the plurality of semiconductor layers 502 may be deposited on the substrate 302 coated with the first conducting layer 304, by masking a number of portions of the first conducting layer 304 for forming a plurality of ohmic contacts.

Further, each of the plurality of semiconductor layers 502 has a width, such as a second width W1, and the length L. A value of the second width 'W1' may be selected based on a first set of parameters associated with the working electrode 500. The first set of parameters may include, but is not limited to, a value of resistive loses associated with the working electrode 500. In an embodiment, a maximum value of the second width 'W1' may be kept constant depending on the resistive loses. The second width 'W1' is smaller than the first width 'W' of the substrate 302. In an embodiment, a value of the first width 'W' of the working electrode 500 may be selected based on a number of semiconductor layers 502 to be deposited on the substrate 304 of the working electrode 500. Further, the length 'L' of the working electrode 500 may be selected based on a second set of parameters. The second set of parameters may include, but is not limited to, a set of dimensional parameters associated with the system 100 and a set of operational parameters associated with the system 100.

Further, the working electrode 500 includes the plurality of ohmic contacts between the plurality of connectors 504 and the first conducting layer 304. Each of the ohmic contacts is formed by joining each of the plurality of connectors 504 to the first conducting layer 304 through the second conducting layer 306. The plurality of ohmic contacts between the first conducting layer 304 and the plurality of connectors 504 allows a flow of charge carriers to the plurality of connectors 504 from the plurality of semiconductor layer 502. The charge carrier collected by the plurality of connectors 504 may generate the electric current which is further supplied to the counter electrode 118 through the connector 110.

Further, the working electrode 500 includes the plurality of connectors 504 distributed across the first conducting layer 304. Each of the plurality of connectors 504 is arranged at a distance equal to the second width 'W1' of each of the plurality of semiconductor layers 502. Such an arrangement of the plurality of connectors 504 and the plurality of the semiconductor layers 502 on the substrate 302 reduces the resistive loses associated with the flow of charge carriers from the plurality of semiconductor layers 502 to the plurality of connectors 504. For instance, upon receiving the portion of solar spectrum 122, each of the plurality of semiconductor layers 502 may generate the charge carriers. As, each of the plurality of connectors 504 is adhered at the distance equal to the second width 'W1', a distance travelled by the charge carrier from each of the semiconductor layers 502 to each of the plurality of connectors 504 is reduced. Thereby, the resistive loses associated with the flow of charge carrier are substantially eliminated.

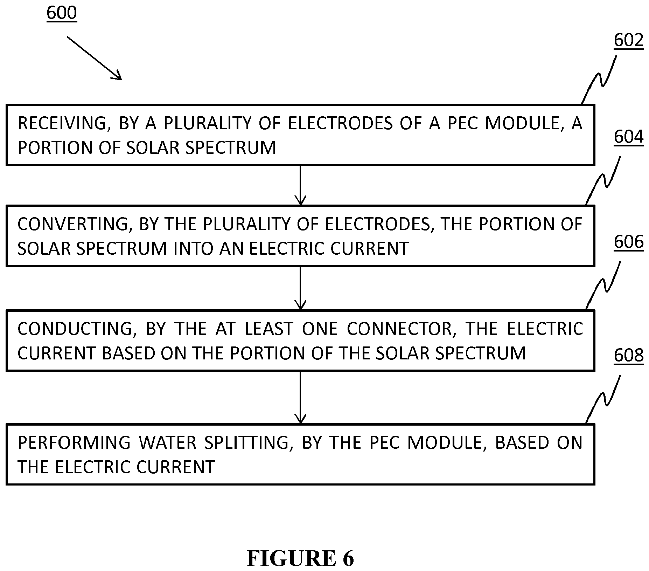

**Figure 6** illustrates a flowchart depicting a method 600 of performing PEC water splitting, according to an inventive embodiment of the present disclosure. For the sake of brevity, features of the system 100 that are already explained in detail in the description of Figures 1a-1g, Figures 2, Figures 3a-3c, Figures 4, and Figure 5 are not explained in detail in the description of Figure 6.

At block 602, the method 600 includes receiving, by the plurality of electrodes 500 of the PEC module 116, the portion of solar spectrum 122. The PEC module 116 positioned in the first compartment 104 filled with the electrolyte solution 110. At block 604, the method 600 includes converting the portion of solar spectrum 122 into an electric current, by the plurality of electrodes 500. The plurality of semiconductor layers 308, 502 generates the charge carrier to create the electric current, upon receiving the portion of the solar spectrum 122.

At block 606, the method 600 includes conducting the electric current based on the portion of the solar spectrum 122, by the at least one connector 120, 504. The first and second connectors 120, 504 receive the charge carriers from the plurality of semiconductor layers 308, 502. At block 608, the method 600 includes performing water splitting based on the electric current, by the PEC module 116. Upon receiving the portion of the solar spectrum 122, the PEC module 116 dissociates the electrolyte solution 110 to produce gases, by initiating either oxidation reaction or reduction reaction in the electrolyte solution 110.

As would be gathered, the present disclosure offers a PEC module 116 comprising working electrodes and the method 600 performing water splitting. The working electrodes 500 are provided with the patterned deposition of the plurality of semiconductor layers 502 on the substrate 302. More specifically, each of the plurality of semiconductor layers 502 is adjacently arranged on the first conducting layer 304 of the substrate 302. Further, the working electrodes 500 include multiple ohmic contacts formed between the plurality of connectors 504 and the first conducting layer 304 of the substrate 302. Owing to multiple ohmic contacts and patterned arrangement of the plurality of semiconductor layers 502, the working electrodes 500, may provide a uniform potential distribution and substantially reduction in the resistive loses.

Further, an inventive PEC module 116 of the present disclosure includes the plurality of working electrodes 500. More specifically, the plurality of working electrodes 500 is distributed on the substrate 202 of the PEC module 116. The plurality of working electrodes 120 are electrically connected with each other through the connectors 504. Each of the plurality of working electrodes 500 is adapted to receive the portion of solar spectrum 122, thereby generating the charge carriers and dissociating the electrolyte solution 110. Owing to the plurality of working electrodes 500 in the PEC module 116, the PEC module 116 eliminates a requirement of the photovoltaic module 124 for providing additional bias to dissociate the electrolyte solution 118 to generate gases. Owing to the plurality of electrodes in the PEC module 116, water splitting is performed effectively and efficiently without any requirement of geometrical scale-up of a single working electrode. Thereby, eliminating a requirement of geometrical scale-up, any possibility of occurrence of resistive loses associated with the geometrical scale-up of the working electrode are eliminated. Hence, the present disclosure offers the PEC module 116 and the method 600 that are efficient, economical, flexible, and effective for performing water splitting.

The drawings and the foregoing description give examples of embodiments.

## Claims

1. A photoelectrochemical (PEC) module (116) for performing water splitting, the PEC module (116) comprising:
a substrate (202);
a plurality of working electrodes (204, 500) arranged on the substrate (202); and
at least one second connector (120) adapted to connect the plurality of working electrodes and adapted to conduct an electric current from each of the plurality of working electrodes (204, 500) wherein each of the working electrodes within the plurality of working electrodes (204, 500) comprises:
a glass substrate (302);
a first conducting layer (304) disposed on the glass substrate (302), wherein the first conducting layer (304) is formed of at least one of an Indium Tin Oxide (ITO) and a Fluorine-doped Tin Oxide (FTO);
a plurality of semiconductor layers (502) disposed on the first conducting layer (304) ; and a plurality of first connectors (504) distributed across the first conducting layer (304), arranged at a distance equal to a width of each of the plurality of semiconductor layers (502) wherein each of the first plurality of connectors (504) is in electrical contact with the plurality of semiconductor layers (502) and wherein the plurality of semiconductor layers (502) is arranged adjacently to each other on the first conducting layer (304); and
a second conducting layer (306) disposed on the first conducting layer (304), wherein the second conducting layer (306) is adapted to adhere the plurality of first connectors (504) on the first conducting layer (304).

2. The photoelectrochemical (PEC) module as claimed in claim 1 further comprising an insulating layer (310) deposited on the each of the plurality of first connectors (504).

3. The photoelectrochemical (PEC) module as claimed in claim 1, wherein the plurality of semiconductor layers (502) is formed of a photoactive material.

4. A method (600) of performing Photoelectrochemical (PEC) water splitting through a photoelectrochemical (PEC) module (116), the method (600) comprising:
receiving, by a plurality of working electrodes (204, 500) of a PEC module (116) according to any of claims 1-3, a portion of solar spectrum;
converting, by the plurality of working electrodes (500), the portion of solar spectrum into an electric current,
conducting, by the at least one second connector (120), the electric current based on the portion of the solar spectrum; and
performing water splitting, by the PEC module (116), based on the electric current.

## Patentansprüche

1. Ein photoelektrochemisches (PEC) Modul (116) zur Durchführung der Wasserspaltung, wobei das PEC-Modul (116) enthält:
ein Substrat (202);
eine Vielzahl von Arbeitselektroden (204, 500), die auf dem Substrat (202) angeordnet sind; und
mindestens ein zweites Verbindungsstück (120), angepasst eine Vielzahl von Arbeitselektroden zu verbinden und angepasst elektrischen Strom von jeder der Vielzahl von Arbeitselektroden (204, 500) zu leiten.
wobei jede der Arbeitselektroden innerhalb der Vielzahl von Arbeitselektroden (204, 500) enthält:
ein Glassubstrat (302);
eine erste leitende Schicht (304), die auf dem Glassubstrat (302) angeordnet ist,
wobei die erste leitende Schicht (304) aus mindestens einem entweder Indium-Zinn-Oxid (IZO) oder fluordotierten Zinn-Oxid (FZO) gebildet ist;
eine Vielzahl von Halbleiterschichten (502), die auf der ersten leitenden Schicht (304) angeordnet sind; und eine Vielzahl von ersten Verbindungsstücken (504), die über die erste leitende Schicht (304) verteilt sind und mit einem Abstand nebeneinander stehen,
der gleich einer Breite jeder der Vielzahl von Halbleiterschichten (502) ist, wobei jede der ersten Vielzahl von Verbindungsstücken (504) in elektrischem Kontakt mit der Vielzahl von Halbleiterschichten (502) steht und wobei die Vielzahl von Halbleiterschichten (502) auf der ersten leitenden Schicht (304) nebeneinander angeordnet ist; und
eine zweite leitende Schicht (306), die auf der ersten leitenden Schicht (304) angeordnet ist, wobei die zweite leitende Schicht (306) angepasst ist, die Vielzahl der ersten Verbindungsstücke (504) an der ersten leitenden Schicht (304) zu erreichen.

2. Das photoelektrochemische (PEC) Modul nach Anspruch 1, das ferner eine Isolierschicht (310) enthält, die auf jedem der mehreren ersten Anschlüsse (504) aufgebracht ist.

3. Das photoelektrochemische (PEC) Modul nach Anspruch 1, wobei eine Vielzahl von Halbleiterschichten (502) aus einem photoaktiven Material gebildet ist.

4. Ein Verfahren (600) zur Durchführung einer photoelektrochemischen (PEC) Wasserspaltung durch ein photoelektrochemisches (PEC) Modul (116), wobei das Verfahren (600) umfasst:
Empfangen eines Teils des Sonnenspektrums durch eine Vielzahl von Arbeitselektroden (204, 500) eines PEC-Moduls (116) nach einem der Ansprüche 1-3;
Umwandeln des Teils des Sonnenspektrums in einen elektrischen Strom durch die mehreren Arbeitselektroden (500),
Leiten des elektrischen Stroms, basierend auf dem Teil des Sonnenspektrums, durch den mindestens einen zweiten Verbindungstück (120); und
Durchführung der Wasserspaltung durch das PEC-Modul (116) auf der Grundlage des elektrischen Stroms.

## Revendications

1. Module photoélectrochimique (PEC) (116) pour réaliser le fractionnement de l'eau, le module PEC (116) comprenant :
un substrat (202) ;
une pluralité d'électrodes de travail (204, 500) disposées sur le substrat (202) ; et
au moins un deuxième connecteur (120) adapté pour connecter la pluralité d'électrodes de travail et pour conduire un courant électrique à partir de chacune de la pluralité d'électrodes de travail (204, 500)
dans lequel chacune des électrodes de travail dans la pluralité d'électrodes de travail (204, 500) comprend :
un substrat en verre (302) ;
une première couche conductrice (304) disposée sur le substrat en verre (302),
dans lequel la première couche conductrice (304) est formée d'au moins un oxyde d'indium-étain (ITO) et d'un oxyde d'étain dopé au fluor (FTG) ;
une pluralité de couches semi-conductrices (502) disposées sur la première couche conductrice (304) ; et une pluralité de premiers connecteurs (504) répartis sur la première couche conductrice (304), disposés à une distance égale à une largeur de chacune de la pluralité de couches semi-conductrices (502), dans laquelle chacun de la première pluralité de connecteurs (504) est en contact électrique avec la pluralité de couches semi-conductrices (502) et dans laquelle la pluralité de couches semi-conductrices (502) est disposée de manière adjacente les unes aux autres sur la première couche conductrice (304) ; et
une deuxième couche conductrice (306) disposée sur la première couche conductrice 25 (304), dans laquelle la deuxième couche conductrice (306) est adaptée pour faire adhérer la pluralité de premiers connecteurs (504) sur la première couche conductrice (304).

2. Module photoélectrochimique (PEC) selon la revendication 1, comprenant en outre une couche isolante (310) déposée sur chacun de la pluralité de premiers connecteurs (504).

3. Module photoélectrochimique (PEC) selon la revendication 1, dans lequel la pluralité de couches semi-conductrices (502) est formée d'un matériau photoactif.

4. Procédé (600) de réalisation d'une dissociation photoélectrochimique de l'eau (PEC) par un module photoélectrochimique (PEC) (116), le procédé (600) comprenant les étapes suivantes :
la réception, par une pluralité d'électrodes de travail (204, 500) d'un module PEC (116) selon l'une quelconque des revendications 1 à 3, d'une partie du spectre solaire ;
la conversion, par la pluralité d'électrodes de travail (500), de la partie du spectre solaire en un courant électrique,
la conduite, par le au moins un deuxième connecteur (120) du courant électrique basé sur la partie du spectre solaire ; et
la réalisation de la dissociation de l'eau par le module PEC (116) sur la base du courant électrique.
